# EUROPEAN PATENT APPLICATION

(11) **EP 4 667 867 A1**
(43) Date of publication of application: **24.12.2025**
(21) Application number: 24789040.3
(22) Date of filing: 11.04.2024
(51) Int. Cl.: G01B 11/22, G01B 11/24, G01N 21/88, G06T 7/00, G06T 7/50, G06T 17/00, H01M 50/516

(54) **WELDING MISALIGNMENT MEASUREMENT DEVICE AND METHOD OF OPERATING SAME**

(30) Priority: 11.04.2023 KR 20230047835; 10.01.2024 KR 20240004225
(71) Applicant: LG Energy Solution, Ltd., Seoul 07335 (KR)
(72) Inventor: OH, Young Joo, Daejeon 34122 (KR); JEONG, In Sung, Daejeon 34122 (KR)
(74) Representative: Goddar, Heinz J.
(86) International application number: PCT/KR2024/004829
(87) International publication number: WO 2024/215098

(57) **Abstract**

A weld step measurement apparatus according to an embodiment disclosed in this document includes a communication circuit, a processor, and a memory configured to store instructions, wherein the instructions may be executed by the processor for the weld step measurement apparatus to acquire 3-dimensional (3D) images of a predetermined area including electrodes stacked on a busbar of a battery from an image acquisition device via the communication circuit, identify step measurement points based on the 3D image, and determine the defectiveness of the battery based on depth values of each of the identified step measurement points.

## Description

### [TECHNICAL FIELD]

### CROSS-REFERENCE TO RELATED APPLICATION

This application claims priorities to and the benefit of Korean Patent Application Nos. 10-2023-0047835, filed on April 11, 2023, and 10-2024-0004225, filed on January 10, 2024, in the Korean Intellectual Property Office, the entire contents of which are incorporated herein by reference.

### TECHNICAL FIELD

Embodiments disclosed in this document relate to a weld step measurement apparatus and operation method thereof.

### [BACKGROUND ART]

The demand for high-performance rechargeable batteries is increasing rapidly due to the growing popularity of portable electronic devices such as laptops, video cameras, and mobile phones, as well as the development of electric vehicles, energy storage systems, robots, and satellites.

Among the commercially available batteries such as nickel-cadmium, nickel-metal hydride, nickel-zinc, and lithium batteries, lithium batteries stand out due to their minimal memory effect compared to nickel-based batteries, allowing for more flexible charging and discharging, very low self-discharge rates, and high energy density.

### [DISCLOSURE]

### [TECHNICAL PROBLEM]

During the manufacturing process of batteries, welding may be required for the electrodes (or leads). For instance, the electrodes (or leads) of a battery can be placed in contact with the top surface of a busbar and then welded to form a joint. Here, a busbar refers to a rod-shaped conductor made in a bar shape from materials such as copper, silver, or tin-plated copper.

In this welding process, pressure can be applied to the electrodes in the direction of the busbar to bring them into contact with the top surface of the busbar before welding. However, if the pressure applied to the electrodes during welding is not adequate, the elasticity of the metallic electrodes may cause them to rebound away from the busbar instead of forming a tight bond. As a result of this rebound, the welded portion of the battery may protrude away from the busbar, creating a step difference.

Additionally, when parallel connecting multiple electrodes (e.g., 3 or 4), multiple electrodes can be stacked on the busbar and welded; however, if the number of electrodes stacked is less than the required number, the welded portion of the battery may sink towards the busbar, creating a step difference.

Such welding defects between the electrodes and the busbar can lead to a decrease in battery performance and increase the likelihood of battery failure due to connection problems during use.

Therefore, it is necessary to inspect the welds for steps to identify battery defects caused by weld variation.

However, determining the appropriate step measurement location during mass production of actual batteries can be challenging due to different product layouts.

Therefore, a method is needed to identify the appropriate location on the welded portion of the battery and measure the step difference.

The technical objects of the embodiments disclosed in this document are not limited to the aforesaid, and other objects not described herein with be clearly understood by those skilled in the art from the descriptions below.

### [TECHNICAL SOLUTION]

A weld step measurement apparatus according to an embodiment disclosed in this document includes a communication circuit, a processor, and a memory configured to store instructions, wherein the instructions may be executed by the processor for the weld step measurement apparatus to acquire 3-dimensional (3D) images of a predetermined area including electrodes stacked on a busbar of a battery from an image acquisition device via the communication circuit, identify step measurement points based on the 3D image, and determine the defectiveness of the battery based on depth values of each of the identified step measurement points.

In an embodiment, the instructions may be executed by the processor for the weld step measurement apparatus to identify predetermined welding locations in the 3D image and identify the step measurement points based on the identified welding locations.

In an embodiment, the step measurement points may be located between the predetermined welding locations.

In an embodiment, the step measurement points may be identified based on outermost welding location among the predetermined welding locations.

In an embodiment, the electrodes stacked on the busbar may include a positive electrode of a first battery cell and a negative electrode of a second battery cell, and the step measurement points identified based on the outermost welding location may be positions for determining the alignment of the positive and negative electrodes.

An operation method of a weld step measurement apparatus according to an embodiment disclosed in this document may include acquiring 3-dimensional (3D) images of a predetermined area including electrodes stacked on a busbar of a battery from an image acquisition device, identifying step measurement points based on the 3D image, and determining the defectiveness of the battery based on depth values of each of the identified step measurement points.

In an embodiment, the identifying of the step measurement points may include identifying predetermined welding locations in the 3D image, and identifying the step measurement points based on the identified welding locations.

In an embodiment, the step measurement points may be located between the predetermined welding locations.

In an embodiment, the step measurement points may be identified based on outermost welding location among the predetermined welding locations.

In an embodiment, the electrodes stacked on the busbar may include a positive electrode of a first battery cell and a negative electrode of a second battery cell, and the step measurement points identified based on the outermost welding location may be positions for determining the alignment of the positive and negative electrodes.

### [ADVANTAGEOUS EFFECTS]

According to various embodiments disclosed in this document, the weld step measurement apparatus and operation method thereof are universally applicable to different products by identifying step measurement points based on 3-dimensional (3D) images.

According to various embodiments disclosed in this document, the weld step measurement apparatus and operation method thereof are capable of measuring heights across the entire area excluding the welded portion by identifying step measurement points based on 3D images.

The advantageous effects of the weld step measurement apparatus and operation method thereof disclosed in this document are not limited to the aforesaid, and other effects not described herein with can be clearly understood by those skilled in the art from the descriptions below.

### [DESCRIPTION OF DRAWINGS]

FIG. 1 is a block diagram of a weld step measurement apparatus according to an embodiment of the present disclosure;
FIG. 2 illustrates an intensity image according to an embodiment of the present disclosure.
FIG. 3 illustrates a depth map according to an embodiment of the present disclosure; and
FIG. 4 illustrates the operation method of a weld step measurement apparatus according to an embodiment of the present disclosure.

With regard to the explanation of the drawings, the same or similar reference numerals may be used for identical or similar components.

### [MODE FOR INVENTION]

Hereinafter, embodiments of the present invention are described with reference to accompanying drawings. However, the description is not intended to limit the present invention to particular embodiments, and it should be construed as including various modifications, equivalents, and/or alternatives of the embodiments described herein.

The embodiments and terms used in this document are not intended to limit the technical features disclosed in this document to specific embodiments, and should be understood to encompass various modifications, equivalents, or alternatives to the disclosed embodiments. In connection with the description of the drawings, like reference numbers may be used for like or related elements. The singular form of a noun corresponding to an item may include one item or a plurality of items unless the relevant context clearly dictates otherwise.

In this document, each of the phrases such as "A or B", "at least one of A and B", "at least one of A or B", "A, B or C", "at least one of A, B and C", and "at least one of A, B, or C" may include any of the items listed together in the corresponding phrase or any possible combination thereof. Terms such as "the first", "the second", "first", "second", "A", "B", "(a)", or "(b)" may be used simply to distinguish such components from other components and do not limit the corresponding components in other aspects (such as importance or order), unless otherwise stated specifically.

In this document, when it is mentioned that a (e.g., first) component is "connected", "coupled", "accessed", with or without the terms "functionally" or "communicatively", to another (e.g., second) component, it means that the component can be connected to the other component directly (e.g., wired or wirelessly) or indirectly (e.g., through a third component).

The methods according to various embodiments disclosed in this document can be included and provided in a computer program product. The computer program product may be traded between sellers and buyers as commodities. A computer program product can be distributed in the form of a device-readable storage medium (e.g., compact disc read-only memory, CD-ROM), or it can be distributed directly, online, between two user devices, or through an application store (e.g., download or upload). In the case of online distribution, at least part of the computer program product may be temporarily stored or temporarily created in a device-readable storage medium such as a manufacturer's server, an application store server, or a relay server's memory.

According to the embodiments disclosed in this document, each of the described components (e.g., modules or programs) may include one or more entities, and some of the plurality of entities may be separately arranged in other components. According to the embodiments disclosed in this document, one or more components or operations may be omitted, or one or more other components or operations may be added. Alternatively or additionally, a plurality of components (e.g., modules or programs) may be integrated into a single component. In this case, the integrated component may perform one or more functions of each of the plurality of components identically or similarly to those performed by the corresponding component of the plurality of components prior to the integration. According to the embodiments disclosed in this document, operations performed by modules, programs, or other components are executed sequentially, in parallel, iteratively, or heuristically, or one or more of the operations are executed in a different order, omitted, or one or more other operations may be added.

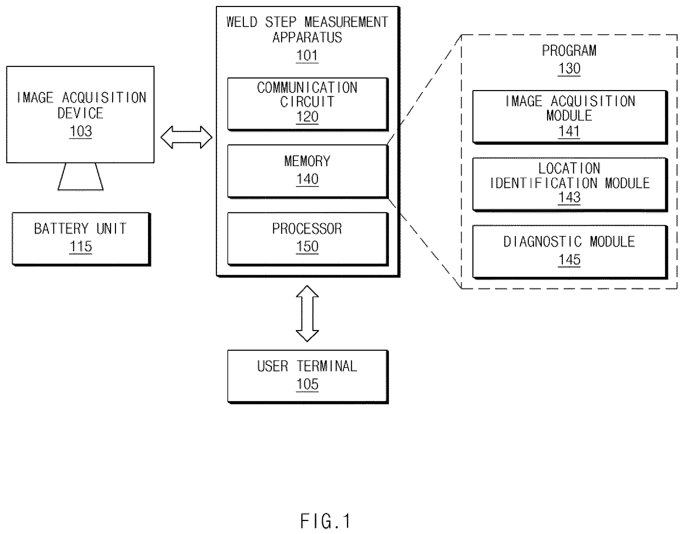

FIG. 1 is a block diagram of a weld step measurement apparatus according to an embodiment of the present disclosure.

With reference to FIG. 1, the weld step measurement apparatus 101 according to an embodiment disclosed in this document may be connected to an image acquisition device 103 and a user terminal 105 through a wired and/or wireless connection.

In an embodiment, the connection between the weld step measurement apparatus 101 and the image acquisition device 103 may be a communication link through a wired and/or wireless network. In an embodiment, the wired network may be based on local area network (LAN) or power line communication. In an embodiment, the wireless network may be based on a short range communication network (e.g., Bluetooth, wireless fidelity (Wi-Fi), infrared data association (IrDA)) or a long-range communication network (e.g., cellular network encompassing 4G and 5G networks).

According to another embodiment, the connection between the weld step measurement apparatus 101 and the image acquisition device 103 may be a connection established through an inter-device communication interface (e.g., bus, general purpose input and output (GPIO), serial peripheral interface (SPI), or mobile industry processor interface (MIPI)).

According to an embodiment, the connection between the weld step measurement apparatus 101 and the user terminal 105 may be a communication link established through a wired and/or wireless network.

In an embodiment, the image acquisition device 103 may acquire images of the battery unit 115. According to an embodiment, the battery unit 115 may include a secondary battery. According to an embodiment, the secondary battery may encompass pouch-type secondary batteries, prismatic secondary batteries, and/or cylindrical secondary batteries.

The image acquisition device 103 may photograph the battery unit 115 to acquire images of the battery unit 115. According to an embodiment, the image acquisition device 103 may be implemented as a camera. According to an embodiment, the image acquisition device 103 may include a camera (e.g., a laser line profiling sensor) capable of acquiring depth values of the battery unit 115 based on lasers. According to an embodiment, the image acquisition device 103 may acquire a 3D profile of the battery unit 115 while moving from one side to the other side of the battery unit 115. Here, the 3D profile may include an intensity image and a depth map of the battery unit 115. Here, the intensity image may represent the brightness and darkness of the surface of the battery unit 115, and the depth map may represent the depth values of the surface of the battery unit 115. According to an embodiment, the 3D profile (or 3D image) may be implemented as a single image that includes depth information within the intensity image.

According to an embodiment, the image acquisition device 103 may be deployed to at least one battery process equipment (e.g., welding process equipment) related to the battery assembly process. In this case, the image acquisition device 103 may acquire images of the battery unit 115 by capturing the battery unit 115 during processing or after processing by the deployed process equipment.

In an embodiment, the user terminal 105 may be a mobile device (e.g., portable phone, laptop computer, smartphone, and smart pad) or a personal computer (PC). In an embodiment, the user terminal 105 may be a terminal used by the administrator of the weld step measurement apparatus 101.

With reference to FIG. 1, the weld step measurement apparatus 101 may include a communication circuit 120, a memory 140, and a processor 150. According to an embodiment, the weld step measurement apparatus 101 shown in FIG. 1 may further include at least one additional component (e.g., a display, input device, or output device) other than the components illustrated in FIG. 1.

In an embodiment, the communication circuit 120 may establish a wired and/or wireless communication channel between the weld step measurement apparatus 101 and the image acquisition device 103 and/or user terminal 105 and exchange data with the image acquisition device 103 and/or the user terminal 105 through the established communication channel. In an embodiment, the communication circuit 120 may acquire the 3D profile of the battery unit 115 from the image acquisition device 103. In an embodiment, the communication circuit 120 may notify the user terminal 105 of any abnormalities in the weld step of the battery unit 115.

In an embodiment, the memory 140 may include volatile memory and/or nonvolatile memory.

In an embodiment, the memory 140 may store data used by at least one component of the weld step measurement apparatus 101 (e.g., processor 150). For example, the data may include the program 130 (or instructions related thereto), input data, or output data. In an embodiment, the instructions may be executed by the processor 150 for the weld step measurement apparatus 101 to perform operations defined by the instructions.

In an embodiment, the program 130 may include one or more software components (e.g., an image acquisition module 141, a location identification module 143, and a diagnostic module 145).

In an embodiment, the processor 150 may include a central processing unit, an application processor, a graphic processing unit, a neural processing unit (NPU), an image signal processor, a sensor hub processor, or a communication processor.

In an embodiment, the processor 150 may execute software (e.g., image acquisition module 141, location identification module 143, and diagnostic module 145) to control at least one other component (e.g., hardware or software component) connected to the weld step measurement apparatus 101 and perform various data processing or operations.

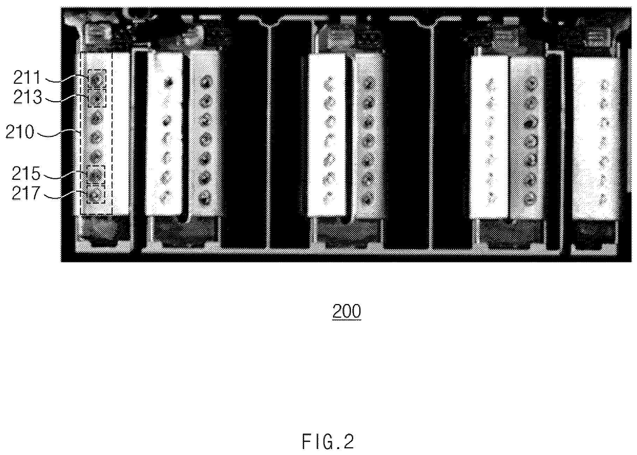

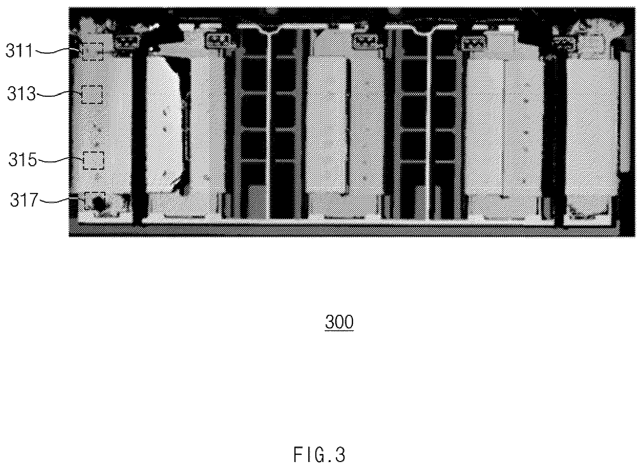

Hereinafter, a description is made of the method for the weld step measurement apparatus 101 to measure the weld step of the leads (or electrodes) of the battery unit 115 via the image acquisition module 141, the location identification module 143, and the diagnostic module 145, with reference to FIGS. 2 and 3.

In an embodiment, the image acquisition module 141 may acquire the 3D image of the battery unit 115 from the image acquisition device 103 through the communication circuit 120. In an embodiment, the image acquisition module 141 may acquire the 3D image of a specific area (e.g., lead area) of the battery unit 115. In an embodiment, the image acquisition module 141 may acquire the 3D image of an area including electrodes stacked on the busbar of the battery unit 115.

With reference to FIG. 2. the intensity image 200 included in the 3D image may illustrate the state where the leads of the battery unit 115 are welded to the busbar.

In an embodiment, the location identification module 143 may identify step measurement points based on the 3D image. In an embodiment, the location identification module 143 may identify a predetermined area within the 3D image and identify step measurement points within the predetermined area.

In an embodiment, the location identification module 143 may detect predetermined objects within the 3D image and identify step measurement points based on the positions of the detected objects. Here, the predetermined objects may represent welding locations. Alternatively, the predetermined objects may be the outer edge of the leads of the battery unit 115.

In an embodiment, the location identification module 143 may identify step measurement points between a plurality of objects detected based on the 3D image.

In an embodiment, the location identification module 143 may identify step measurement points based on the positions of the outermost objects among a plurality of objects detected in the 3D image. In an embodiment, the location identification module 143 may identify step measurement points based on the positions of points located at a predetermined distance from the outermost object among a plurality of objects detected in the 3D image.

For example, the location identification module 143 may identify a predetermine area 210 in the intensity image 200 and identify a plurality of welding locations 211, 213, 215, and 217 included in the predetermined area.

In an embodiment, the location identification module 143 may identify step measurement points based on the outermost welding locations 211 and 217. For example, the location identification module 143 may identify positions above a predetermined distance from the welding location 211 (e.g., the distance required for the leads of the battery unit 115 to extend beyond welding location 211) as step measurement points. Alternatively, the location identification module 143 may identify positions below a predetermined distance from the welding location 217 (e.g., the distance required for the leads of the battery unit 115 to extend beyond welding location 217) as step measurement points.

In an embodiment, the location identification module 143 may identify step measurement points based on neighboring welding locations 211 and 213, or 215, and 217. For example, the location identification module 143 may identify points between welding locations 211 and 213 as step measurement points. Alternatively, the location identification module 143 may identify points between welding locations 215 and 217 as step measurement points.

In an embodiment, the diagnostic module 145 may diagnose the defects of the battery unit 115 based on the step measurement points identified by the location identification module 143.

In an embodiment, the diagnostic module 145 may identify depth values corresponding to the identified points based on the step measurement points identified by the location identification module 143. In an embodiment, the diagnostic module 145 may identify depth values corresponding to the step measurement points based on the 3D image.

For example, referring to the depth map 300, the diagnostic module 145 may identify the depth values at positions 311 above a predetermined distance from the welding location 211 and positions 317 below a predetermined distance from the welding location 217. For example, the diagnostic module 145 may identify the depth value at a point 313 between welding locations 211 and 213. For example, the diagnostic module 145 may identify the depth value at a point 315 between welding locations 215 and 217.

In an embodiment, the diagnostic module 145 may diagnose the defects of the battery unit 115 based on a comparison of multiple depth values.

For example, based on the depth values at positions 311 and 317, the diagnostic module 145 may diagnose the presence of weld step in the battery unit 115. For example, when the difference between the depth values at position 313 and position 315 exceeds a threshold difference, the diagnostic module 145 may diagnose the presence of weld step in the battery unit 115.

Alternatively, the diagnostic module 145 may diagnose the defect of the battery unit 115 based on the depth values at positions 313 and 315. For example, when the difference between the depth values at positions 313 and 315 exceeds a threshold difference, the diagnostic module 145 may diagnose the presence of weld step in the battery unit 115.

In an embodiment, the diagnostic module 145 may determine the battery unit 115 with weld step as defective. In an embodiment, the diagnostic module 145 may notify the user terminal 105 of the battery unit 115 with weld step.

According to an embodiment, the weld step measurement apparatus 101 and the image acquisition device 103 may be implemented in a single device.

As described above, the welding step measurement apparatus 101 can prevent misdetection of height information caused by welding through active identification of step measurement points. Additionally, as described above, the welding step measurement apparatus 101 can prevent misdetection of height information caused by interference from the lead in the region of interest (ROI) for busbar tilt correction by actively identifying step measurement points.

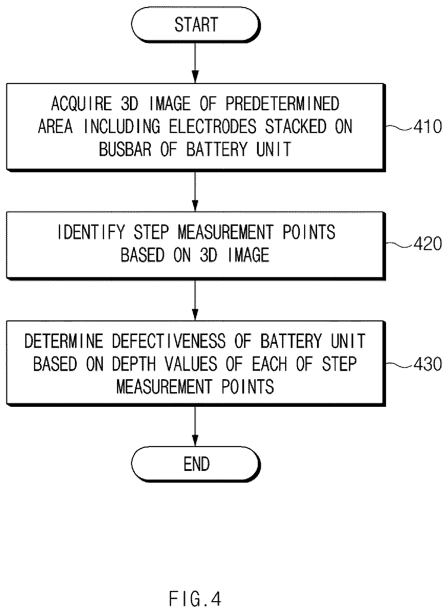

FIG. 4 illustrates the operation method of the weld step measurement apparatus 101 according to an embodiment of the present disclosure. The operations of FIG. 4 may be explained with reference to FIGS. 1 to 3.

Referring to FIG. 4, in operation 410, the weld step measurement apparatus 101 may acquire a 3D image of a predetermined area including electrodes stacked on the busbar of the battery from the image acquisition device. In an embodiment, the weld step measurement apparatus 101 may acquire the images from the image acquisition device 103. Here, the image acquisition device 103 may include a camera (e.g., a laser line profile sensor) capable of acquiring depth values of the battery unit 115 based on lasers. According to one embodiment, the image acquisition device 103 may acquire a 3D profile of the battery unit 115 while moving from one side to the other side of the battery unit 115. Here, the 3D profile may include an intensity image and a depth map of the battery unit 115. Here, the intensity image may represent the brightness and darkness of the surface of the battery unit 115, and the depth map may represent the depth values of the surface of the battery unit 115. According to an embodiment, the 3D profile (or 3D image) may be implemented as a single image that includes depth information within the intensity image.

In operation 420, the welding step measurement apparatus 101 may identify step measurement points based on the 3D image.

In an embodiment, the weld step measurement apparatus 101 may identify a predetermined area within the 3D image and identify step measurement points within the predetermined area.

In an embodiment, the weld step measurement apparatus 101 may detect predetermined objects within the 3D image and identify step measurement points based on the positions of the detected objects. Here, the predetermined objects may represent welding locations. Alternatively, the predetermined objects may be the outer edge of the leads of the battery unit 115.

In an embodiment, the weld step measurement apparatus 101 may identify step measurement points between a plurality of objects detected based on the 3D image.

In an embodiment, the weld step measurement apparatus 101 may identify step measurement points based on the positions of the outermost objects among a plurality of objects detected in the 3D image. In an embodiment, the weld step measurement apparatus 101 may identify step measurement points based on the positions of points located at a predetermined distance from the outermost object among a plurality of objects detected in the 3D image.

For example, the weld step measurement apparatus 101 may identify a predetermine area 210 in the intensity image 200 and identify a plurality of welding locations 211, 213, 215, and 217 included in the predetermined area.

In an embodiment, the weld step measurement apparatus 101 may identify step measurement points based on the outermost welding locations 211 and 217. For example, the weld step measurement apparatus 101 may identify positions above a predetermined distance from the welding location 211 (e.g., the distance required for the leads of the battery unit 115 to extend beyond welding location 211) as step measurement points. Alternatively, the weld step measurement apparatus 101 may identify positions below a predetermined distance from the welding location 217 (e.g., the distance required for the leads of the battery unit 115 to extend beyond welding location 217) as step measurement points.

In an embodiment, the weld step measurement apparatus 101 may identify step measurement points based on neighboring welding locations 211 and 213, or 215, and 217. For example, the weld step measurement apparatus 101 may identify points between welding locations 211 and 213 as step measurement points. Alternatively, the weld step measurement apparatus 101 may identify points between welding locations 215 and 217 as step measurement points.

In operation 430, the welding step measurement apparatus 101 may determine the defectiveness of the battery based on the depth values of each of the step measurement points.

In an embodiment, the weld step measurement apparatus 101 may identify depth values corresponding to the identified points based on the step measurement points identified by the location identification module 143. In an embodiment, the weld step measurement apparatus 101 may identify depth values corresponding to the step measurement points based on the 3D image.

For example, referring to the depth map 300, the weld step measurement apparatus 101 may identify the depth values at positions 311 above a predetermined distance from the welding location 211 and positions 317 below a predetermined distance from the welding location 217. For example, the weld step measurement apparatus 101 may identify the depth value at a point 313 between welding locations 211 and 213. For example, the weld step measurement apparatus 101 may identify the depth value at a point 315 between welding locations 215 and 217.

In an embodiment, the weld step measurement apparatus 101 may diagnose the defects of the battery unit 115 based on a comparison of multiple depth values.

For example, based on the depth values at positions 311 and 317, the weld step measurement apparatus 101 may diagnose the presence of weld step in the battery unit 115. For example, when the difference between the depth values at position 311 and position 317 exceeds a threshold difference, the weld step measurement apparatus 101 may diagnose the presence of weld step in the battery unit 115.

Alternatively, the weld step measurement apparatus 101 may diagnose the defect of the battery unit 115 based on the depth values at positions 313 and 315. For example, when the difference between the depth values at positions 313 and 315 exceeds a threshold difference, the weld step measurement apparatus 101 may diagnose the presence of weld step in the battery unit 115.

In an embodiment, the weld step measurement apparatus 101 may determine the battery unit 115 with weld step as defective.

## Claims

1. A weld step measurement apparatus comprising:
a communication circuit;
a processor; and
a memory configured to store instructions,
wherein the instructions are executed by the processor for the weld step measurement apparatus to acquire 3-dimensional (3D) images of a predetermined area including electrodes stacked on a busbar of a battery from an image acquisition device via the communication circuit, identify step measurement points based on the 3D image, and determine the defectiveness of the battery based on depth values of each of the identified step measurement points.

2. The weld step measurement apparatus of claim 1, wherein the instructions are executed by the processor for the weld step measurement apparatus to identify predetermined welding locations in the 3D image and identify the step measurement points based on the identified welding locations.

3. The weld step measurement apparatus of claim 2, wherein the step measurement points are located between the predetermined welding locations.

4. The weld step measurement apparatus of claim 2, wherein the step measurement points are identified based on outermost welding location among the predetermined welding locations.

5. The weld step measurement apparatus of claim 1, wherein the electrodes stacked on the busbar comprises a positive electrode of a first battery cell and a negative electrode of a second battery cell, and the step measurement points identified based on the outermost welding location are positions for determining the alignment of the positive and negative electrodes.

6. An operation method of a weld step measurement apparatus, the method comprising:
acquiring 3-dimensional (3D) images of a predetermined area including electrodes stacked on a busbar of a battery from an image acquisition device;
identifying step measurement points based on the 3D image; and
determining the defectiveness of the battery based on depth values of each of the identified step measurement points.

7. The operation method of claim 6, wherein the identifying of the step measurement points comprises:
identifying predetermined welding locations in the 3D image; and
identifying the step measurement points based on the identified welding locations.

8. The operation method of claim 7, wherein the step measurement points are located between the predetermined welding locations.

9. The operation method of claim 7, wherein the step measurement points are identified based on outermost welding location among the predetermined welding locations.

10. The operation method of claim 6, wherein the electrodes stacked on the busbar comprises a positive electrode of a first battery cell and a negative electrode of a second battery cell, and the step measurement points identified based on the outermost welding location are positions for determining the alignment of the positive and negative electrodes.
